## Europäisches Patentamt

## European Patent Office

## Office européen des brevets

(11) Veröffentlichungsnummer: **0 321 718**

**A1**

# EUROPÄISCHE PATENTANMELDUNG

(21) Anmeldenummer: **88119515.0**

(22) Anmeldetag: **24.11.88**

(51) Int. Cl.⁴: **A22C 17/04**

(30) Priorität: **22.12.87 DE 3743541**

(43) Veröffentlichungstag der Anmeldung:
**28.06.89 Patentblatt 89/26**

(84) Benannte Vertragsstaaten:
**AT BE CH DE ES FR GB IT LI LU NL SE**

(71) Anmelder: **NORDISCHER MASCHINENBAU RUD. BAADER GMBH + CO KG**
**Geniner Strasse 249**
**D-2400 Lübeck(DE)**

(72) Erfinder: **Hegelmann, Heinz-Dieter**
**Hellkamp 10**
**D-2400 Lübeck(DE)**

(54) **Einrichtung zum Abstreifen des Fleisches von den Extremitäten von Geflügel.**

(57) Bei dieser Einrichtung findet eine erste, um eine senkrechte Achse umlaufend angetriebene Tragscheibe (3) mit mindestens einem Abstreifwerkzeug (5) Verwendung, welches als Rohrkörper aus zwei auseinandersteuerbaren Halbschalen (7, 7) mit aufragender Stirnschneide (19) ausgebildet ist und den Knochen beispielsweise eines Geflügelschenkels im Bereich des distalen Gelenkkopfes desselben umfaßt. Dieser ersten Tragscheibe steht eine zweite, um eine die Achse (2) der ersten geneigt schneidende Achse (24) synchron mit dieser umlaufende Tragscheibe (23) gegenüber deren Unterseite den Abstreifwerkzeugen an der ersten Tragscheibe gegenüber gestellte Vertiefungen zur formangepaßten Abstützung der Schenkel im Bereich des proximalen Gelenkkopfes gegenüberstehen. Das Abstreifen des Fleisches erfolgt aufgrund der über einen Drehwinkel der Tragscheiben von 180° erfolgenden Annäherung der den proximalen Gelenkkopf abstützenden Vertiefung gegenüber dem Abstreifwerkzeug.

Fig. 1

## Einrichtung zum Abstreifen des Fleisches von den Extremitäten von Geflügel

Die Erfindung betrifft eine Einrichtung zum Abstreifen des Fleisches von den Extremitäten von Geflügel, insbesondere von den Schenkeln von Puten oder Hähnchen, mit Mitteln zum axialen Vorschieben des zu bearbeitenden Schenkels unter zentrierendem Angriff an dem Schenkelknochen im Bereich des proximalen Gelenkes, sowie Mitteln zum Rückhalten des Fleisches während des Vorschiebens unter radialer Umfassung des Schenkelknochens.

Aus der US-PS 3 672 000 ist eine Maschine zum automatischen Entbeinen von Geflügelschenkeln bekannt, bei welcher der Schenkelknochen an einem der an seinen Enden befindlichen Gelenkköpfe durch ein Halteelement erfaßt und das Fleisch mittels unmittelbar hinter diesem Halteelement ansetzender Schabeblätter unter Bewegung derselben in Längsrichtung des Knochens abgestreift wird.

Aus der US-PS 4 041 572 ist eine in ähnlicher Weise wirksame Einrichtung bekannt. Abschließender Arbeitsgang ist bei dieser Einrichtung das Durchtrennen der das Fleisch nach dem Abstreifen von dem Gelenkkopf am freien Ende des Schenkelknochens noch festhaltenden Sehnen und Gewebeteile.

Schließlich ist aus der US-PS 4 446 600 eine Einrichtung zu entnehmen, bei der der Schenkelknochen ausgeschoben wird.

Die der nachfolgend beschriebenen Erfindung zugrundeliegende Aufgabe besteht in der Verbesserung der letzterwähnten Einrichtung durch Verringerung des maschinellen Aufwandes und Steigerung der Leistung.

Diese Aufgabe wird erfindungsgemäß dadurch gelöst, daß eine um eine im wesentlichen senkrechte Achse umlaufend angetriebene erste Tragscheibe und eine um eine die Achse der ersten geneigt schneidende Achse synchron mit der ersten Tragscheibe umlaufende zweite Tragscheibe vorgesehen ist, daß die Mittel zum Rückhalten des Fleisches an der ersten Tragscheibe befestigt sind und aus wenigstens einem Abstreifwerkzeug bestehen, welches einen den Schenkelknochen anfänglich im Bereich seines distalen Gelenkkopfes umfassenden Rohrkörper aus wenigstens zwei Segmenten aufweist, wobei der Rohrkörper an seiner aufragenden Stirnkante als Ringschneide ausgestaltet und im wesentlichen senkrecht zu der Umlaufebene der ersten Tragscheibe ausgerichtet ist, daß über dem Abstreifwerkzeug eine ebenfalls der ersten Tragscheibe zugeordnete, den zu bearbeitenden Schenkel gegenüber dem Abstreifwerkzeug zentrierend aufnehmende Aufnahme angeordnet ist, und daß die Mittel zum axialen Verschieben des Schenkels der zweiten Tragscheibe zugeordnet sind und im wesentlichen aus an der der ersten Tragscheibe zugekehrten Unterseite angeordneten, den Abstreifwerkzeugen gegenübergestellten Vertiefungen zur formangepaßten Abstützung der Schenkel im Bereich des proximalen Gelenkkopfes bestehen.

Die Vorteile dieser Einrichtung liegen insbesondere in der sich allein aus dem synchronen Umlauf der ersten und der zweiten Tragscheibe ergebenden Annäherung dieser Elemente, d.h. in der Herleitung der auf den Schenkelknochen einwirkenden Ausschiebekraft aus diesem Vorgang. Freie und dementsprechend empfindliche Kolbenstangen werden auf diese Weise nicht benötigt.

Vorteilhafterweise sind die Segmente des Rohrkörpers des Abstreifwerkzeuges gegen die Kraft einer Feder und mittensynchron zueinander spreizbar ausgebildet, wobei die entsprechende Steuerung mittels einer stationären Zentralkurve erfolgt. Um einerseits die durch die Deformation der abgestreiften Fleischteile auftretenden Kräfte klein zu halten und andererseits sicherzustellen, daß das Abstreifen des Fleisches in unmittelbarer Nähe der Knochenoberfläche erfolgt, ist vorgesehen, daß der Rohrkörper zumindest in dem an die Ringschneide anschließenden Bereich von kegelstumpfförmiger Gestalt ist und einen ebenso gestalteten Hohlraum umgrenzt. Dabei können bei einem Abstreifwerkzeug, dessen Rohrkörper aus zwei Segmenten zusammengesetzt ist, die Teilungsebene des Rohrkörpers radial zu der ersten Tragscheibe verlaufen und die beiden Segmente desselben schnabelförmig spreizbar sein. Eine einfache Beschickbarkeit wird dadurch erreicht, daß die Aufnahme aus mindestens zwei, einen Trichter bildenden Führungsklappen bestehen, welche jeweils gegen die Kraft einer Feder auseinanderdrängbar angeordnet sind. Um den bereits durchgeschobenen Schenkelknochen vollends ausstoßen zu können, kann in jeder Vertiefung ein Ausstoßstempel vorgesehen sein, der zweckmäßig in einem zentralen Durchbruch in jeder den proximalen Gelenkkopf abstützenden Vertiefung angeordnet wird, wobei dessen Stirnfläche einen Teil der Wandung der Vertiefung bildet. Eine besonders sichere Führung des proximalen Gelenkkopfes ergibt sich, wenn jede Vertiefung die Gestalt einer Kalotte oder eines Hohlkegels hat und die Stirnfläche jedes Ausstoßstempels entsprechend ausgestaltet ist. Dabei weist der Ausstoßstempel eine solche Ausrichtung auf, daß seine Achse an der Stelle der größten Annäherung zwischen der ersten und der zweiten Tragscheibe betrachtet mit der Achse des Rohrkörpers des jeweiligen Abstreifwerkzeuges fluchtet.

Das Vorschieben der Ausstoßstempel können kraftbetätigte Mittel besorgen, die im Bereich der größten Annäherung der ersten und der zweiten Tragscheibe angeordnet sind und aus einem Kurbeltrieb mit einem Kurbelschlitten bestehen können welcher jeweils bei Ankunft einer Arbeitseinheit eine Ein-Touren-Aktivierung erfährt und dabei mit dem freien Ende des entsprechenden Ausstoßstempels in Wirkverbindung tritt, um diesen zu betätigen. Um schließlich die abgestreifte Fleischhülse ungehindert entnehmen zu können kann eine Einrichtung zum einseitigen Spalten derselben vorgesehen sein, was dadurch bewerkstelligt werden kann, daß jedem Ausstoßstempel ein Trennelement mit einer sich von dessen Peripherie aus radial erstreckenden Stirnschneide zugeordnet ist, wobei dieselbe im wesentlichen von der Ebene der Stirnfläche des Ausstoßstempels ausgehend der Kontur der Vertiefung und der diese umgebenden Unterfläche d er zweiten Tragscheibe entsprechend geformt ist.

Die Erfindung wird nachfolgend anhand eines in der Zeichnung dargestellten Ausführungsbeispiels näher erläutert. Es zeigt jeweils in vereinfachter Darstellung

Fig.1 eine Seiten-Teilansicht der Gesamteinrichtung

Fig.2 eine Seitenansicht eines Abstreifwerkzeuges mit darüber angeordneter Aufnahme für die Schenkel,

Fig.3 eine ausschnittweise Draufsicht auf das Abstreifwerkzeug mit teilweiser Darstellung des Steuermechanismus' für dessen Segmente.

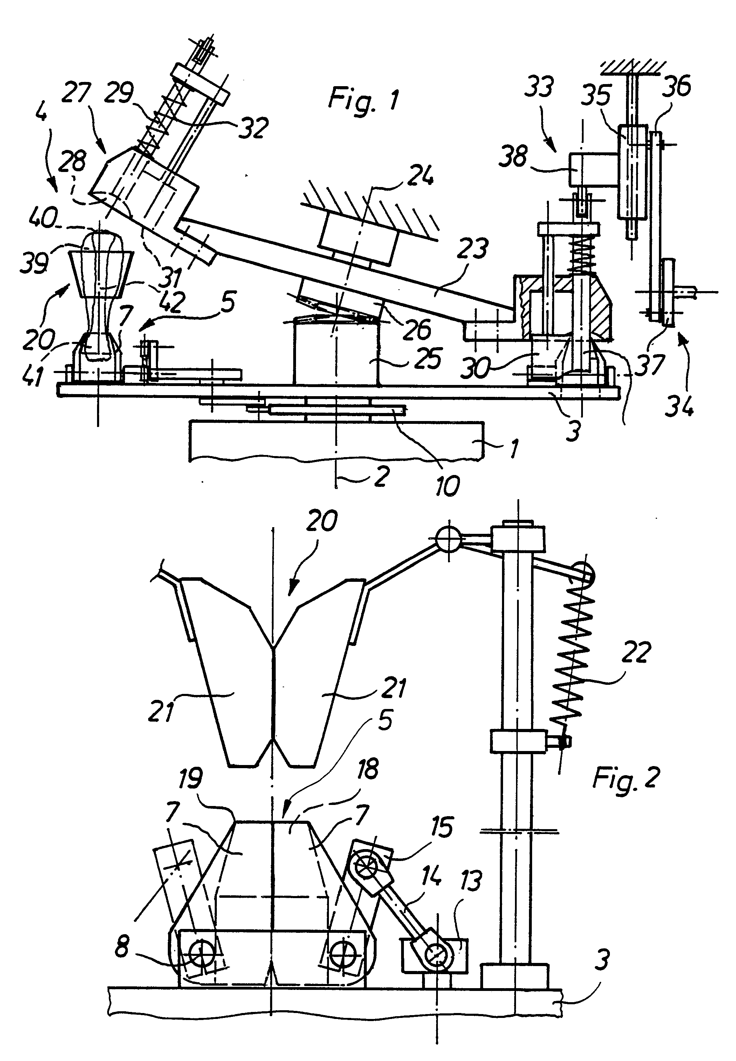

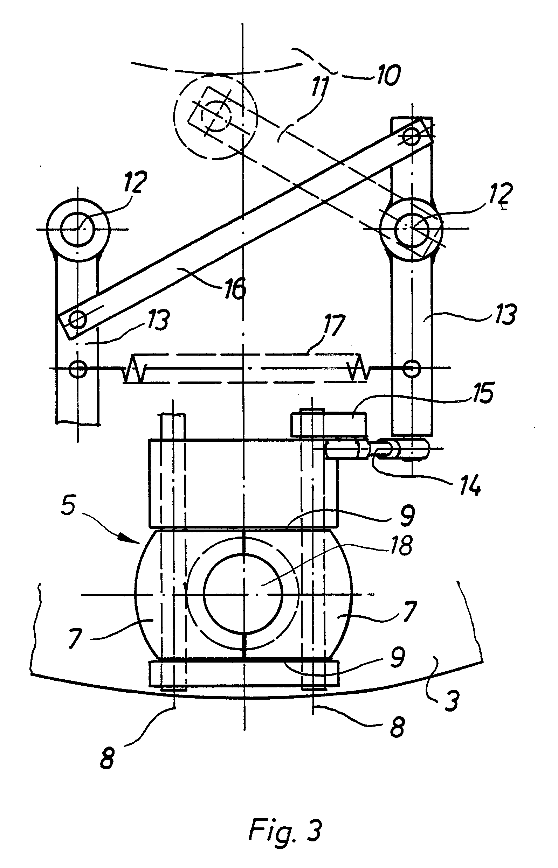

Aus einem nur angedeutet dargestellten Maschinengestell 1 ragt eine auf geeignete Weise umlaufend angetriebene Achse 2 heraus, auf welcher eine erste Tragscheibe 3 drehsicher befestigt ist. Diese trägt in der Nähe ihres äußeren Umfanges beispielsweise sechs unter gleicher Teilung angeordnete Arbeitsstationen 4. Jede derselben besteht aus einem Absteifwerkzeug 5 aus zwei einen Rohrkörper bildenden halbschalenförmigen Segmenten 7, welche um etwa radial zu der Tragscheibe 3 und parallel zu deren Umlaufebene verlaufend Achsen 8 schwenkend schnabelartig spreizbar sind. Der aus den Segmenten 7 gebildete Rohrkörper weist die Gestalt eines Kegelstumpfs auf, welcher an gegenüberliegenden Seiten mit einander parallelen und senkrecht zu der Teilungsebene der Segmente 7 verlaufenden Abflachungen 9 versehen ist. Das schnabelartige Spreizen der Segmente 7 erfolgt über einen in Fig. 3 näher dargestellten Steuermechanismus. Dieser besteht aus einem sich auf einer gestellfesten Zentralkurve 10 abstützenden Rollenhebel 11, welcher über eine die Tragscheibe 3 durchdringende Achse 12 drehfest mit einem Schwenkhebel 13 verbunden ist. An dem freien Ende desselben greift ein Lenker 14 an, der die Bewegung des Schwenkhebels 13 auf das freie Ende eines mit der Achse 8 eines der Segmente 7 drehfest verbundenen Kurbelhebels 15 überträgt und damit die von der Zentralkurve 10 verursachte Auslenkung des Rollenhebels 11 in eine Schwenkbewegung des gekoppelten Segmentes 7 umsetzt. Der Aufbau des Steuermechanismus' für das andere Segment 7 entspricht dem beschriebenen, was Schwenkhebel 13, Lenker 14 und Kurbelhebel 15 und ihre Verbindung untereinander betrifft. Die Schwenkbewegung dieses Segmentes 7 wird jedoch über einen Synchronisationslenker 16 von der des erstbeschriebenen Mechanismus' abgegriffen, so daß die beiden Segmente 7 eine gegensinnig synchrone Schwenkbewegung ausführen können. Dabei wird die Schließstellung durch eine die beiden Schwenkhebel 13 verbindende Feder 17 erzeugt. Die Segmente 7 bilden wie bereits erwähnt einen Rohrkörper von der Gestalt eines Kegelstumpfes und umschließen einen Hohlraum 18 von ebenfalls kegel stumpfartiger Gestalt, wobei der obere Abschluß als Ringschneide 19 ausgestaltet ist. Über jedem Abstreifwerkzeug 5 befindet sich eine Aufnahme 20 für den zu bearbeitenden Schenkel. Dieser besteht gemäß Fig.2 aus zwei einen Trichter bildenden Führungsklappen 21, welche jeweils gegen die Kraft einer Feder 22 auseinanderdrängbar angeordnet sind.

Oberhalb der ersten Tragscheibe 3 befindet sich eine zweite Tragscheibe 23. Sie ist um eine die Achse 2 der ersten geneigt schneidende Achse 24 umlaufend gelagert und erhält ihren Antrieb durch Koppelung der beiden Tragscheiben 3 und 23 mittels Kegelzahnrädern 25 und 26. Die zweite Tragscheibe 23 trägt an ihrem äußeren Umfang mit den Abstreifwerkzeugen 5 zusammenwirkende Baueinheiten 27. Jede derselben weist an ihrer der Tragscheibe 3 zugekehrten Unterseite eine Vertiefung 28 von der Gestalt einer Kalotte oder eines Hohlkegels auf, die jeweils einem Abstreifwerkzeug gegenüberliegen. Das Zentrum der Vertiefung 28 wird von der Stirnfläche eines Ausstoßstempels 29 gebildet, welcher aus der Baueinheit 27 rückseitig herausragt und an diesem Ende eine Kurvenrolle trägt. Die Achse des Ausstoßstempels 29 ist derart ausgerichtet, daß sie mit der des Abstreifwerkzeuges 5 an der Stelle der größten Annäherung zwischen den Tragscheiben 3 und 23 fluchtet. Mit dem Ausstoßstempel 29 ist ein Trennelement 30 mit einer Stirnschneide 31 gekoppelt, welche in ihrer Ausgestaltung der Kontur der Vertiefung 28 und der diese umgebenden Unterfläche der Tragscheibe 23 folgt und in der Rückzugstellung des Ausstoßstempels 29 mit diesen Flächen abschließt. Dabei wird die Rückzugstellung durch eine Feder 32 bewirkt. Im Bereich der größten Annäherung der beiden Tragscheiben 3 und 23 sind kraftbetätigte Mittel 33 zum Vorschieben des Ausstoßstempels 29 und des Trennelementes 30 angeordnet. Diese Mittel 33 bestehen aus einem Kurbeltrieb 34 mit einem Kurbelschlitten 35, welcher über einen Kurbellenker 36 mit einer Kurbelscheibe 37 verbunden ist. Der Kurbelschlitten 35 ist mit einem Kurvenstück 38 versehen, welches mit der Kurvenrolle des Ausstoßstempels 29 in Wirkverbindung treten kann.

Die Wirkungsweise der Einrichtung ist folgende: Ein zu entbeinender Schenkel 39 wird mit der langen Achse seines im wesentlichen ovalen Querschnitts tangential zu der Umlaufrichtung der Tragscheibe 3 und mit dem proximalen Gelenkkopf 40 nach oben in die Aufnahme 20 eingestellt, wobei der distale Gelenkkopf 41 in das im Beschickbereich geöffnete Abstreifwerkzeug 5, d.h. zwischen dessen Segmente 7 ragt. Durch den kontinuierlichen Umlauf der Tragscheiben 3 und 23 nähert sich die Baueinheit 27 dem zunächst freiliegenden proximalen Ende des Schenkels 39 und setzt schließlich auf diesem auf, wobei durch die Vertiefung 28 eine Zentrierung erfolgt, so daß sich der proximale Gelenkkopf 40 gegen die Stirnfläche des Ausstoßstempels 29 anlegt. Inzwischen sind die Segmente 7 des Abstreifwerkzeuges 5 in Schließstellung gebracht worden, so daß deren Stirnschneide 31 den Schenkelknochen 42 radial umfassen. Mit wachsender Annäherung der Tragscheiben 3 und 23 schiebt sich nun der Schenkelknochen 42 fortschreitend in das Abstreifwerkzeug 5 hinein, wobei die Stirnschneide 19 ein Rückhalten und Abschaben des Fleisches bewirkt und die Führungsklappen 21 der Aufnahme 20 verdrängt werden. Kurz bevor der proximale Gelenkkopf 40 die Stirnschneide 19 erreicht, werden die Segmente zumindest teilweise auseinandergesteuert. In dieser Stellung wird die Stelle der größten Annäherung der Tragscheiben 3 und 23 erreicht, was dazu geführt hat, daß der proximale Gelenkkopf 40 ebenfalls in das Abstreifwerkzeug 5 eingetaucht ist. Das abgetreifte Fleisch liegt nunmehr als Fleischhülse um das Abstreifwerkzeug 5 herum und ist noch mit Sehnen und Bändern mit dem Schenkelknochen 42 verbunden. Um die Trennung zu vervollständigen wird der Kurbeltrieb 34 für eine Umdrehung aktiviert, was bewirkt, daß der Ausstoßstempel 29 vorgeschoben wird und den Schenkelknochen 42 ausstößt. Das gleichzeitig gegen die Tragscheibe 3 mitbewegte Trennelement 30 öffnet dabei die Fleischhülse, so daß das abgestreifte Fleisch leicht entnommen werden kann.

## Ansprüche

1. Einrichtung zum Abstreifen des Fleisches von den Extremitäten von Geflügel, insbesondere von den Schenkeln von Puten oder Hähnchen, mit Mitteln zum axialen Vorschieben des zu bearbeitenden Schenkels unter zentrierendem Angriff an dem Schenkelknochen im Bereich des proximalen Gelenkes, sowie Mitteln zum Rückhalten des Fleisches während des Vorschiebens unter radialer Umfassung des Schenkelknochens, **dadurch gekennzeichnet,**
- daß eine um eine im wesentlichen senkrechte Achse (2) umlaufend angetriebene erste Tragscheibe (3) und
- eine um eine die Achse (2) der ersten geneigt schneidende Achse (24) synchron mit der ersten Tragscheibe (3) umlaufende zweite Tragscheibe (23) vorgesehen ist,
- daß die Mittel zum Rückhalten des Fleisches an der ersten Tragscheibe (3) befestigt sind und aus wenigstens einem Abstreifwerkzeug (5) bestehen, welches einen den Schenkelknochen (42) anfänglich im Bereich seines distalen Gelenkkopfes (41) umfassenden Rohrkörper aus wenigstens zwei Segmenten (7) aufweist, wobei der Rohrkörper an seiner aufragenden Stirnkante als Ringschneide (19) ausgestaltet und im wesentlichen senkrecht zu der Umlaufebene der ersten Tragscheibe (3) ausgerichtet ist,.
- daß über dem Abstreifwerkzeug (5) eine ebenfalls dererste Tragscheibe (3) zugeordnete, den zu bearbeitenden Schenkel (39) gegenüber dem Abstreifwerkzeug (5) zentrierend aufnehmende Aufnahme (20) angeordnet ist,
- und daß die Mittel zum axialen Verschieben des Schenkels (39) der zweiten Tragscheibe (23) zugeordnet sind und im wesentlichen aus an der der ersten (3) zugekehrten Unterseite angeordneten, den Abstreifwerkzeugen (5) gegenübergestellten Vertiefungen (28) zur formangepaßten Abstützung der Schenkel (39) im Bereich des proximalen Gelenkkopfes (40) bestehen.

2. Einrichtung nach Anspruch 1, **dadurch gekennzeichnet**, daß die Segmente (7) des Rohrkörpers des Abstreifwerkzeuges (5) gegen die Kraft einer Feder (17) und mittensynchron zueinander spreizbar ausgebildet sind, wobei die dementsprechende Steuerung mittels einer stationären Zentralkurve (10) erfolgt.

3. Einrichtung nach Anspruch 2, **dadurch gekennzeichnet**, daß der Rohrkörper zumindest in dem an der Ringschneide (19) anschließenden Bereich von kegelstumpfförmiger Gestalt ist und einen ebenso gestalteten Hohlraum (18) umgrenzt.

4. Einrichtung nach einem der Ansprüche 1 bis 3 , mit einem Abstreifwerkzeug (5), dessen Rohrkörper aus zwei Segmenten (7) zusammengesetzt ist, **dadurch gekennzeichnet**, daß die Teilungsebene des Rohrkörpers radial zu der ersten Tragscheibe (3) verläuft und die beiden Segmente (7) schnabelartig spreizbar sind.

5. Einrichtung nach Anspruch 1, **dadurch gekennzeichnet**, daß die Aufnahme (20) aus mindestens zwei, einen Trichter bildenden Führungsklappen (21) besteht , welche jeweils gegen die Kraft einer Feder (22) auseinanderdrängbar angeordnet sind.

6. Einrichtung nach Anspruch 1, **dadurch gekennzeichnet**, daß jede Vertiefung (28) einen zentralen Durchbruch aufweist, welcher durch einen Ausstoßstempel (29) ausgefüllt ist, dessen Stirnfläche einen Teil der Wandung der Vertiefung (28) bildet.

7. Einrichtung nach den Ansprüchen 1 oder 6, **dadurch gekennzeichnet**, daß jede Vertiefung (28) die Gestalt einer Kalotte oder eines Hohlkegels hat und die Stirnfläche jedes Ausstoßstempels (29) entsprechendausgestaltet ist.

8. Einrichtung nach einem der Ansprüche 4,6 und 7 , **dadurch gekennzeichnet**, daß der Ausstoßstempel (29) eine Ausrichtung aufweist, daß seine Achse an der Stelle der größten Annäherung zwischen der ersten Tragscheibe (3) und der zweiten Tragscheibe (23) betrachtet mit der Achse des Rohrkörpers des jeweiligen Abstreifwerkzeuges (5) fluc htet.

9. Einrichtung nach einem der Ansprüche 1 bis 8 , **dadurch gekennzeichnet**, daß im Bereich der größten Annäherung der ersten Tragscheibe (3) und der zweiten Tragscheibe (23) kraftbetätigte Mittel (33) zum Vorschieben des Ausstoßstempels (29) gegen das entsprechende Abstreifwerkzeug (5) angeordnet sind.

10. Einrichtung nach Anspruch 9 , **dadurch gekennzeichnet**, daß als kraftbetätigtes Mittel (33) ein Kurbeltrieb (34) mit einem Kurbelschlitten (35) Verwendung findet, welcher jeweils bei Ankunft einer Arbeitseinheit eine Ein-Touren-Aktivierung erfährt und dabei mit dem freien Ende des entsprechenden Ausstoßstempels (29) in Wirkverbindung tritt, um diesen zu betätigen.

11. Einrichtung nach einem der Ansprüche 6 bis 10, **dadurch gekennzeichnet**, daß jedem Ausstoßstempel (29) ein Trennelement (30) mit einer sich von dessen Peripherie aus radial erstreckenden Stirnschneide (31) zugeordnet ist, wobei dieselbe im wesentlichen von der Ebene der Stirnfläche des Ausstoßstempels (29) ausgehend der Kontur der Vertiefung (20) und der diese umgebenden Unterfläche der zweiten Tragscheibe (23) entsprechend geformt ist.

Fig. 1

Fig. 2

Fig. 3

Europäisches Patentamt

# EUROPÄISCHER RECHERCHENBERICHT

Nummer der Anmeldung

EP 88 11 9515

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| D,A | US-A-3672000 (MARTIN)<br>* das ganze Dokument *<br>--- | 1 | A22C 17/04 |
| A | GB-A-1066030 (CAMPBELL SOUP COMPANY)<br>--- | | |
| D,A | US-A-4041572 (MARTIN)<br>--- | | |
| A | US-A-4446600 (HOOLEY)<br>--- | | |
| A | EP-A-049091 (BERNARD MATTHEWS)<br>--- | | |
| A | DE-A-3227430 (OSCAR MAYER FOODS)<br>--- | | |
| A | NL-A-7006469 (HORMEL)<br>--- | | |
| P,A | EP-A-280080 (LINDERT)<br>------ | | |

**RECHERCHIERTE SACHGEBIETE (Int. Cl.4 )**

A22C

Der vorliegende Recherchenbericht wurde für alle Patentansprüche erstellt

| Recherchenort | Abschlußdatum der Recherche | Prüfer |
|---|---|---|
| DEN HAAG | 24 FEBRUAR 1989 | DE LAMEILLIEURE D. |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument

............................................................

& : Mitglied der gleichen Patentfamilie, übereinstimmendes
   Dokument

EPO FORM 1503 03.82 (P0403)